# EUROPÄISCHE PATENTANMELDUNG

(11) **EP 1 321 189 A1**
(43) Veröffentlichungstag der Anmeldung: **25.06.2003**
(21) Anmeldenummer: 01130037.3
(22) Anmeldetag: 18.12.2001
(51) Int. Cl.: B01J 27/188, C07C 41/09

(54) **Phosphorwolframsäure Katalysatoren auf Aktivkohleträger**

(71) Anmelder: Cognis S.p.A., 22073 Fino Mornasco (IT)
(72) Erfinder: Corbella, alberto, 22100 Como (IT); Tunice, Massimoto, 20020Busto Garolfo (IT); Mazzochia, Carlo, 20133 Milano (IT); Tempesti, Ezio, 20132 Milano (IT); Kaddouri, Abdel Hakim, 20129 Milano (IT)
(74) Vertreter: Fabry, Bernd, Dr.

(57) **Zusammenfassung**

Vorgeschlagen werden Katalysatoren, die dadurch erhältlich sind, dass man Phosphorwolframsäure H₃PW₁₂O₄₀ auf einen Aktivkohleträger aufbringt.

Verwendung dieser Katalysatoren zur Veretherung von Alkoholen.

## Beschreibung

### Gebiet der Erfindung

Die Erfindung befindet sich auf dem Gebiet der metallorganischen Katalyse und betrifft neue Phosphor-Wolfram-Katalysatoren, ein Verfahren zu ihrer Herstellung, ein Verfahren zur Herstellung von Dialkylethern unter Einsatz der Katalysatoren sowie die Verwendung der Katalysatoren in der Ethersynthese.

### Stand der Technik

Im Bereich der Kosmetik haben langkettige Dialkylether in den letzten Jahren an Bedeutung gewonnen. Dicaprylyl Ether wird beispielsweise als kosmetischer Ölkörper mit ausgezeichneten sensorischen Eigenschaften zu Herstellung von Cremes und Lotionen eingesetzt, Distearylether findet Anwendung als Perlglanzmittel zur Herstellung von Shampoos. Die Synthese dieser Stoffgruppe findet in der Regel durch Kondensation der entsprechenden Alkohole statt, wobei als Katalysatoren vor allem oxidierende Säure, vorzugsweise Schwefelsäure in Betracht kommt. Daneben sind Verfahren bekannt, die die unterschiedlichsten CoKatalysatoren, wie beispielsweise Tocopherol und dergleichen empfehlen [vgl. **DE 19740450 A1, DE 19740451 A1, DE 19814066 A1, DE 19824019 A1**]. Aus ökonomischen Gründen ist natürlich bevorzugt, die Reaktion in Hinblick auf Umsatzgeschwindigkeit - und Selektivität zu optimieren.

Demzufolge hat die Aufgabe der vorliegenden Erfindung darin bestanden, ein Verfahren zur Herstellung von Dialkylethern einschließlich der zugehörigen Katalysatoren zu entwickeln, welches im Vergleich zu den Verfahren des Stands der Technik in kürzeren Zeiten höhere Mengen Dialkylether und geringere Mengen an unerwünschten Nebenprodukten, speziell Olefinen, liefert.

### Beschreibung der Erfindung

Gegenstand der Erfindung sind Katalysatoren, die dadurch erhältlich sind, dass man Phosphorwolframsäure H₃PW₁₂O₄₀ auf einen Aktivkohleträger aufbringt.

Überraschenderweise wurde gefunden, dass die erfindungsgemäßen Zubereitungen auf Basis Phosphorwolframsäure (oder synonym : Wolframatophosphorsäure) effektive Katalysatoren für die Veretherung von primären Alkoholen darstellen. Ein besonderer Vorteil gegenüber den Katalysatoren des Stands der Technik, speziell Mineralsäuren, besteht darin, dass deutlich weniger Anteile an unerwünschten Alkenen gebildet werden.

Ein weiterer Gegenstand der Erfindung betrifft ein Verfahren zur Herstellung von Katalysatoren, bei dem man Phosphorwolframsäure H₃PW₁₂O₄₀ auf einen Aktivkohleträger aufbringt.

### Vorbehandlung (Funktionalisierung) des Trägers

Obschon es grundsätzlich möglich ist, unvorbehandelte Träger einzusetzen, hat es sich doch als vorteilhaft erwiesen, die Aktivkohle in geeigneter Weise einer Vorbehandlung zu unterwerfen ("Funktionalisierung"), um auf diese Weise sicherzustellen, dass die Phosphorwolframsäure tatsächlich auf der Oberfläche bzw. in den Poren der Aktivkohle verankert wird und nicht einfach wieder ausgewaschen wird. Eine Möglichkeit besteht darin, die Aktivkohle zu pyrolysieren, d.h. in einer Inertgasatmosphäre über einen Zeitraum von 1 bis 5 h Temperaturen im Bereich von 250 bis 800, vorzugsweise 500 bis 600 °C auszusetzen. Alternativ ist auch eine chemische Funktionalisierung möglich. Hierzu wird der Träger mit einer oxidierenden Säure, beispielsweise Schwefelsäure oder vorzugsweise Salpetersäure behandelt. Es ist zudem möglich, beide Formen der Funktionalisierung nacheinander anzuwenden.

### Imprägnierung des Trägers

Die Imprägnierung des - vorzugsweise vorbehandelten bzw. funktionalisierten - Trägers kann in an sich bekannter Weise durch Tränken erfolgen. Zu diesem Zweck wird zunächst eine Lösung der Phosphorwolframsäure H₃PW₁₂O₄₀ in einem geeigneten Lösemittel hergestellt, wobei der Aktivsubstanzgehalt zwischen 1 und 30, vorzugsweise 2 und 10 Gew.-% liegen kann. Als Lösemittel kommen beispielsweise Wasser, C₁-C₄-Alkohole, C₁-C₄-Dialkylethern, Dioxan, Tetrahydrofuran sowie deren Gemischen. Es hat sich als vorteilhaft erwiesen, den Träger zunächst bei Temperaturen von 35 bis 40 °C etwa 1 h unter Rühren einem Vakuum (10-1 bis 10-2 atm) auszusetzen und dieses dann mit einem Inertgas, vorzugsweise Stickstoff zu brechen. In diese Atmosphäre wird dann die zuvor bereitete Phosphorwolframlösung getropft. Nach Beendigung der Zugabe rührt man etwa 1 h weiter, um eine innige Vermischung der Phasen sicherzustellen. Anschließend wird wieder Vakuum angelegt und das Lösemittel entfernt. Im Hinblick auf die Menge an fest gebundener aktiver Phase hat es sich ferner als vorteilhaft erwiesen, den Katalysator nach der Imprägnierung definiert zu trocknen ("Aktivierung"). Dazu kommen wieder die gleichen chemischen bzw. thermischen Schritte in Betracht, die zuvor schon im Rahmen der Funktionalisierung Verwendung gefunden haben. Man kann den Katalysator beispielsweise wieder bei Temperaturen im Bereich von 250 bis 800 °C über einen Zeitraum von 1 bis 4 h pyrolysieren, wobei diesmal jedoch ein etwas niedrigerer Temperaturbereich bevorzugt ist, um eine thermische Zersetzung der aktiven Komponente auszuschließen; typisch sind Temperaturen um 300 °C. Dabei gilt, je kürzer die Trocknungszeit, desto höher kann die Trocknungstemperatur liegen. Die chemische Aktivierung kann wieder durch Behandlung mit verdünnter Schwefel- oder Salpetersäure erfolgen. Der Katalysator kann anschließend in getrockneter Form oder als 10 bis 20 Gew.-%ige Dispersion in einer Mineralsäure in den Handel gelangen und eingesetzt werden.

### Gewerbliche Anwendbarkeit

Ein weiterer Gegenstand der vorliegenden Erfindung betrifft die Verwendung einer Zubereitung von Phosphorwolframsäure H₃PW₁₂O₄₀ auf einem Aktivkohleträge als Katalysator zur Veretherung von Alkoholen. Noch präziser ist ein Verfahren zur Herstellung von Dialkylethern der Formel **(I)** betroffen,

**R**^{**1**}**OR**^{**2**} **(I)**

in der R¹ und R² unabhängig voneinander für lineare oder verzweigte, gesättigte oder ungesättigte Kohlenwasserstoffreste mit 6 bis 22, vorzugsweise 8 bis 18 Kohlenstoffatome stehen, dadurch gekennzeichnet, dass man lineare und/oder verzweigte, gesättigte oder ungesättigte primäre Alkohole in Gegenwart von Phosphorwolframsäure H₃PW₁₂O₄₀ auf einem Aktivkohleträger verethert. Typische Beispiele für geeignete Ausgangsalkohole sind die bekannten linearen Fettalkohole sowie die ganz oder teilweise verzweigten Oxo- und Guerbetalkohole, als da sind: Capronalkohol, Caprylalkohol, 2-Ethylhexylalkohol, Caprinalkohol, Laurylalkohol, Myristylalkohol, Cetylalkohol, Stearylalkohol, Cetearylalkohol, Isostearylalkohol, Oleylalkohol, 2-Hexyldecanol, 2-Octyldodecanol, Elaidylalkohol, Linolylalkohol, Linolenylalkohol, Arachylalkohol, Gadoleylalkohol, Behenylalkohol, Erucylalkohol sowie deren Gemische und Anlagerungsprodukte mit 1 bis 10 Mol Alkylenoxid, vorzugsweise Ethylenoxid. Besonders bevorzugt ist der Einsatz von Caprylalkohol, 2-Ethylhexylalkohol und Stearylalkohol. Üblicherweise werden symmetrische Ether hergestellt, es können jedoch auch Gemische verschiedener Alkohole zum Einsatz gelangen, so dass als Reaktionsprodukte Dialkylether mit einer statistischen Verteilung der Alkylreste erhalten werden. Die Reaktion findet üblicherweise bei Temperaturen im Bereich von 150 bis 250 °C statt, wobei die Katalysatoren vorzugsweise in Mengen von 1 bis 10 Gew.-% - bezogen auf den Einsatzalkohol - verwendet werden.

In der folgenden Tabelle 1 sind die freien Reaktionsenthalpien und Gleichgewichtskonstanten für die Veretherung von Octanol in Abhängigkeit der Reaktionstemperatur angegeben:

**Tabelle 1**

| **Thermodynamische Daten zur Veretherung von n-Octanol** | | | | |
|---|---|---|---|---|
| **Temperatur [°C]** | **ΔG°**_{**r**}**(Ether) kcal/mol** | **ΔG°**_{**r**}**(Alkene) kcal/mol** | **K**_{**eq**}**(Ether)** | **K**_{**eq**}**(Ether)** |
| 130 | 0,15 | -5,82 | 0,82 | 1433 |
| 150 | -0,30 | -6,48 | 1,43 | 2229 |
| 170 | -0,75 | -7,15 | 2,34 | 3370 |
| 200 | -1,42 | -8,13 | 4,53 | 5711 |
| 250 | -2,55 | -9,81 | 11,63 | 12581 |

Aus diesen Daten ergibt sich eine bevorzugte Reaktionstemperatur oberhalb von 150 °C, um eine Gleichgewichtskonstante für die Bildung der Ether von größer 1 zu erzielen. Abgesehen davon, dass es sich mit Blick auf das Massenwirkungsgesetz als nützlich erweist, das gebildete Kondensationswasser kontinuierlich zu entfernen, ist es ebenso von Vorteil, den Alkohol kontinuierlich nachzudosieren, um eine Reaktionskinetik zweiten Grades hinsichtlich der Veretherung und ersten Grades hinsichtlich der - unerwünschten - Dehydratisierung bzw. Alkenbildung zu fördern.

**Herstellbeispiele H1 bis H6.** Aktivkohle der Firma Engelhard wurde mit bzw. ohne Vorbehandlung mit einer 5 Gew.-%igen wässrigen Lösung von Phosphorwolframsäure behandelt, bei 90 °C mit Wasser gewaschen, bis im kein gelöstes Wolfram mehr festzustellen war und dann definiert getrocknet. Dabei kamen folgende Varianten zum Einsatz:
A) Funktionalisierung der Aktivkohle durch Pyrolyse bei 600 °C, 4h, unter Stickstoff
B) Funktionalisierung der Aktivkohle durch Behandlung mit 10 Gew.-%iger Salpetersäure
C) Aktivierung des imprägnierten Katalysators bei 90 °C unter Vakuum
D) Aktivierung des imprägnierten Katalysators bei 300 °C, 4 h, unter Stickstoff

Der theoretische Gehalt an aktiver Phase auf dem Träger sollte 15 Gew.-% betragen. Die Ergebnisse sind in Tabelle 2 zusammengefasst. Die Bestimmung des tatsächlichen Gehaltes an aktiver Phase erfolgte durch UV-Spektroskopie (260-265 nm).

**Tabelle 2**

| **Katalysatorherstellung** | | | |
|---|---|---|---|
| **Bsp.** | **Funktionalisierung** | **Aktivierung** | **Gehalt aktive Phase [Gew.-%]** |
| H1 | ohne | A | 5,65 |
| H2 | ohne | B | 5,30 |
| H3 | A | A | 11,47 |
| H4 | A | B | 12,10 |
| H5 | B | A | 5,91 |
| H6 | B | B | 10,35 |

**Beispiel 1 und Vergleichsbeispiel V1.** 200 g Caprylalkohol wurden bei 150 °C in Gegenwart von 2 g Schwefelsäure (Vergleichsbeispiel V1) bzw. 15 g eines heterogenen Katalysators gemäß Herstellbeispiel H4 (erfindungsgemäßes Beispiel 1) verethert. Das Reaktionswasser wurde laufend aus dem Gleichgewicht entfernt und der Reaktionsverlauf durch Probennahme verfolgt. Die Ergebnisse sind in Tabelle 3 zusammengefasst.

**Tabelle 3**

| **Veretherung von Caprylalkohol (Umsatz in %-d.Th, Ether und Alken in Gew.-%)** | | | | | | |
|---|---|---|---|---|---|---|
| **Reaktionszeit** h | **V1** | | | **1** | | |
| | **Umsatz** | **Ether** | **Alken** | **Umsatz** | **Ether** | **Alken** |
| 1 | 5,6 | 95,5 | 4,5 | | | |
| 2 | 11,7 | 87,4 | 12,6 | 22,8 | 91,3 | 8,7 |
| 3 | 30,0 | 83,7 | 16,3 | 61,0 | 90,3 | 9,7 |
| 4 | 63,8 | 80,1 | 19,9 | 88,0 | 87,4 | 12,6 |
| 5 | 90,5 | 76,5 | 23,5 | 95,3 | 88,2 | 11,8 |

Man erkennt, dass unter Einsatz der erfindungsgemäßen Katalysatoren in kürzeren Zeiten ein höherer Umsatz erzielt wird und gleichzeitig die Selektivität in Richtung der Zielprodukte deutlich zunimmt.

## Patentansprüche

1. Katalysatoren, dadurch erhältlich, dass man Phosphorwolframsäure H₃PW₁₂O₄₀ auf einen Aktivkohleträger aufbringt.

2. Verfahren zur Herstellung von Katalysatoren, bei dem man Phosphorwolframsäure H₃PW₁₂O₄₀ auf einen Aktivkohleträger aufbringt.

3. Verfahren nach Anspruch 2, **dadurch gekennzeichnet, dass** man die Aktivkohle vor der Beschichtung bei Temperaturen im Bereich von 250 bis 800 °C pyrolysiert.

4. Verfahren nach Anspruch 2, **dadurch gekennzeichnet, dass** man die Aktivkohle vor der Beschichtung mit einer oxidierenden Säure behandelt.

5. Verfahren nach mindestens einem der Ansprüche 2 bis 4, **dadurch gekennzeichnet, dass** man den Aktivkohleträger mit einer Lösung von Phosphorwolframsäure H₃PW₁₂O₄₀ imprägniert.

6. Verfahren nach Anspruch 5, **dadurch gekennzeichnet, dass** man Lösemittel einsetzt, die ausgewählt sind aus der Gruppe, die gebildet wird von Wasser, C₁-C₄-Alkoholen, C₁-C₄--Dialkylethern, Dioxan, Tetrahydrofuran sowie deren Gemischen.

7. Verfahren nach den Ansprüchen 5 und/oder 6, **dadurch gekennzeichnet, dass** man nach der Imprägnierung das Lösemittel wieder entfernt.

8. Verfahren nach mindestens einem der Ansprüche 2 bis 8, **dadurch gekennzeichnet, dass** man den Katalysator durch chemische oder thermische Behandlung aktiviert.

9. Verfahren zur Herstellung von Dialkylethern der Formel **(I),**
**R**^{**1**}**OR**^{**2**} **(I)**
in der R¹ und R² unabhängig voneinander für lineare oder verzweigte, gesättigte oder ungesättigte Kohlenwasserstoffreste mit 6 bis 22 Kohlenstoffatome stehen, **dadurch gekennzeichnet, dass** man lineare und/oder verzweigte, gesättigte oder ungesättigte primäre Alkohole in Gegenwart von Phosphorwolframsäure H₃PW₁₂O₄₀ auf einem Aktivkohleträger verethert.

10. Verwendung einer Zubereitung von Phosphorwolframsäure H₃PW₁₂O₄₀ auf einem Aktivkohleträge als Katalysator zur Veretherung von Alkoholen.
